# EUROPEAN PATENT APPLICATION

(11) **EP 4 220 438 A1**
(43) Date of publication of application: **02.08.2023**
(21) Application number: 21872366.6
(22) Date of filing: 17.09.2021
(51) Int. Cl.: G06F 16/903, G06F 40/279

(54) **INFORMATION PROCESSING DEVICE, AND NOTIFICATION METHOD**

(30) Priority: 28.09.2020 JP 2020161794
(71) Applicant: Sony Group Corporation, Minato-Ku, Tokyo, 108-0075 (JP)
(72) Inventor: HIGASHINAKA, Chiaki, Tokyo 108-0075 (JP); SUZUKI, Saya, Tokyo 108-0075 (JP); HIDA, Remu, Tokyo 108-0075 (JP); INOUE, Masanori, Tokyo 108-0075 (JP)
(74) Representative: 2SPL Patentanwälte PartG mbB
(86) International application number: PCT/JP2021/034349
(87) International publication number: WO 2022/065237

(57) **Abstract**

In an information processing apparatus (10), a communication unit (11) receives a text created in a terminal device (20), and a control unit (13) performs noise detection to determine whether a noise expression is included in the received text and notifies, when the noise expression is included in the received text, the terminal device (20) of detection of the noise expression.

## Description

### Field

The present disclosure relates to an information processing apparatus and a notification method.

### Background

In computer network systems, interactive systems are known. In construction of each of the interactive systems, a response to a text input by a user is automatically generated and given to the user. In order to give the response to the user, there is a method of preparing a text for response (hereinafter, sometimes referred to as "response text") in advance. Various types of text are input by the user, and therefore, it is necessary to prepare various types of response texts. Therefore, using crowdsourcing, creation of the response texts is requested from an unspecified number of workers.

### Citation List

### Patent Literature

Non Patent Literature 1: Sunahase, Takeru, Yukino Baba, and Hisashi Kashima. "Pairwise HITS: Quality estimation from pairwise comparisons in creator-evaluator crowdsourcing process." Thirty-First AAAI Conference on Artificial Intelligence. 2017., Internet <URL: https://aaai.org/ocs/index.php/AAAI/AAAI17/paper/view/14353 /13870>

### Summary

### Technical Problem

However, some of the unspecified number of workers who create the response texts do not work as instructed, joke, and create response texts including abuseful language, and thus, there is a possibility that response texts including noise may be created. Response texts including noise leads to a reduction in quality of the response texts.

Therefore, the present disclosure proposes a technology to maintain the quality of texts created by an unspecified number of workers.

### Solution to Problem

An information processing apparatus according to the present disclosure includes a communication unit and a control unit. The communication unit receives a text created in a terminal device. The control unit performs noise detection to determine whether a noise expression is included in the received text and notifies, when the noise expression is included in the received text, the terminal device of detection of the noise expression.

### Brief Description of Drawings

FIG. 1 is a diagram illustrating an exemplary configuration of a computer network system according to a first embodiment of the present disclosure.
FIG. 2 is a diagram illustrating an exemplary configuration of an information processing apparatus according to the first embodiment of the present disclosure.
FIG. 3 is a diagram illustrating an exemplary configuration of a storage unit according to the first embodiment of the present disclosure.
FIG. 4 is a table illustrating an exemplary configuration of a noise expression DB according to the first embodiment of the present disclosure.
FIG. 5 is a table illustrating an exemplary configuration of a noise expression DB according to the first embodiment of the present disclosure.
FIG. 6 is a table illustrating an exemplary configuration of a noise detection DB according to the first embodiment of the present disclosure.
FIG. 7 is a table illustrating an exemplary configuration of a valid expression DB according to the first embodiment of the present disclosure.
FIG. 8 is a diagram illustrating an exemplary configuration of a model text DB according to the first embodiment of the present disclosure.
FIG. 9 is a diagram illustrating an exemplary configuration of a model text DB according to the first embodiment of the present disclosure.
FIG. 10 is a table illustrating an exemplary configuration of a malicious worker DB according to the first embodiment of the present disclosure.
FIG. 11 is a table illustrating an exemplary configuration of a synonym DB according to the first embodiment of the present disclosure.
FIG. 12 is a diagram illustrating an operation example of the information processing apparatus according to the first embodiment of the present disclosure.
FIG. 13 is a diagram illustrating an operation example of the information processing apparatus according to the first embodiment of the present disclosure.
FIG. 14 is a diagram illustrating the operation example of the information processing apparatus according to the first embodiment of the present disclosure.
FIG. 15 is a diagram illustrating the operation example of the information processing apparatus according to the first embodiment of the present disclosure.
FIG. 16 is a diagram illustrating the operation example of the information processing apparatus according to the first embodiment of the present disclosure.
FIG. 17 is a diagram illustrating an operation example of the information processing apparatus according to the first embodiment of the present disclosure.
FIG. 18 is a diagram illustrating the operation example of the information processing apparatus according to the first embodiment of the present disclosure.
FIG. 19 is a diagram illustrating the operation example of the information processing apparatus according to the first embodiment of the present disclosure.
FIG. 20 is a diagram illustrating the operation example of the information processing apparatus according to the first embodiment of the present disclosure.
FIG. 21 is a diagram illustrating the operation example of the information processing apparatus according to the first embodiment of the present disclosure.
FIG. 22 is a diagram illustrating an exemplary process in a noise expression expansion unit according to a second embodiment of the present disclosure.
FIG. 23 is a table illustrating an exemplary process in the noise expression expansion unit according to the second embodiment of the present disclosure.

### Description of Embodiments

Embodiments of the present disclosure will be described below in detail with reference to the drawings. Note that in the following embodiments, the same portions or processes are denoted by the same reference numerals and symbols, and in some cases a repetitive description thereof will be omitted.

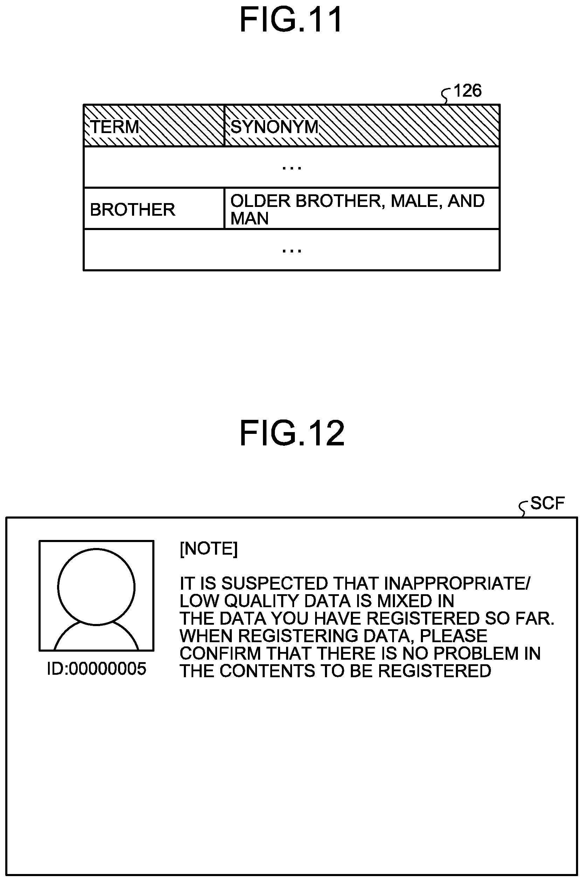

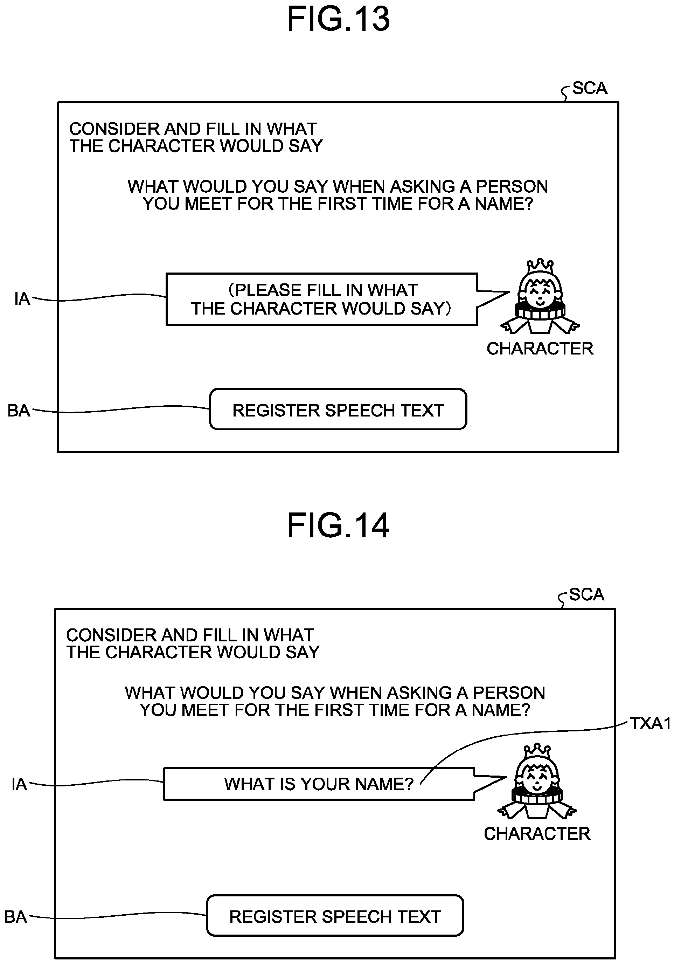

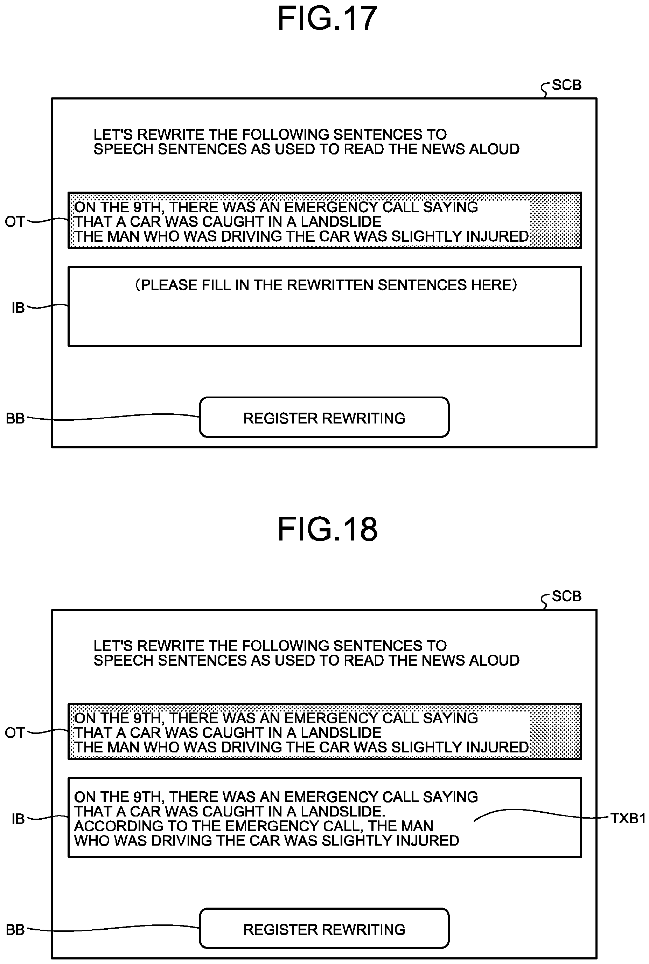

Furthermore, the technology of the present disclosure will be described in the order of items shown below.
[First Embodiment]
   <Configuration of computer network system>
   <Configuration of information processing apparatus>
   <Configuration of storage unit>
   <Configuration of noise expression DB >
   <Configuration of noise detection DB>
   <Configuration of valid expression DB>
   <Configuration of model text DB>
   <Configuration of malicious worker DB>
   <Configuration of Synonym DB>
   <Process in malicious worker detection unit>
   <Process in noise expression expansion unit>
   <Operation of information processing apparatus>
      <Operation example 1 (FIG. 12) >
      <Operation example 2 (FIGS. 13 to 16)>
      <Operation example 3 (FIGS. 17 to 21)>
[Second Embodiment]
   <Process in noise expression expansion unit>
[Third Embodiment]

### [Effects of disclosed technology]

### [First Embodiment]

### <Configuration of computer network system>

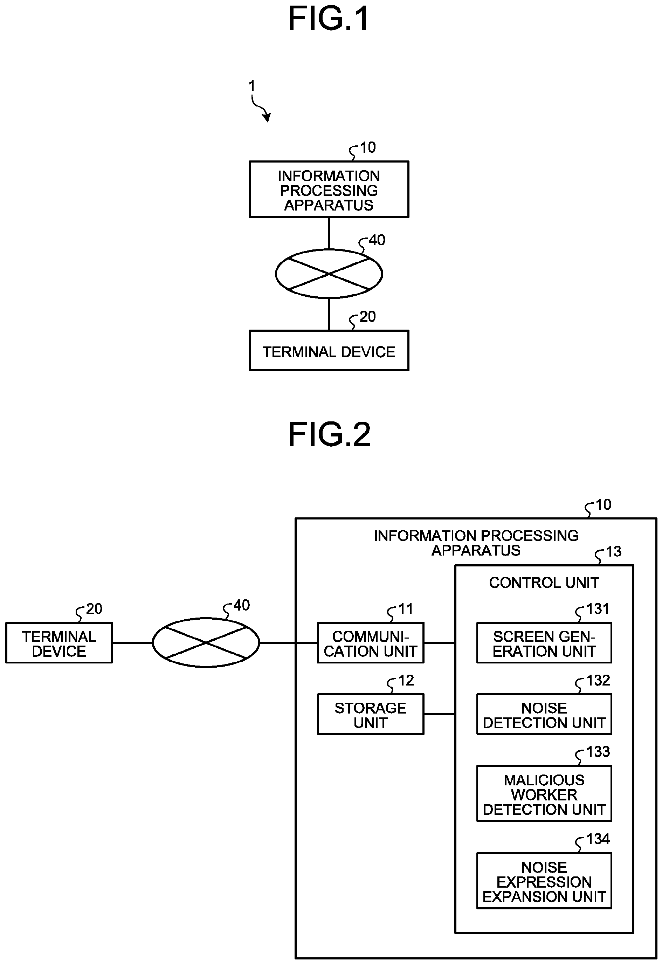

FIG. 1 is a diagram illustrating an exemplary configuration of a computer network system according to a first embodiment of the present disclosure. In FIG. 1, the computer network system 1 includes an information processing apparatus 10, a terminal device 20, and a network 40. The information processing apparatus 10 and the terminal device 20 are connected via the network 40. An example of the information processing apparatus 10 includes a server apparatus. Examples of the terminal device 20 include a personal computer, and a smart device such as a smartphone and a tablet terminal. An example of the network 40 includes the Internet.

### <Configuration of information processing apparatus>

FIG. 2 is a diagram illustrating an exemplary configuration of the information processing apparatus according to the first embodiment of the present disclosure. In FIG. 2, the information processing apparatus 10 includes a communication unit 11, a storage unit 12, and a control unit 13. The control unit 13 includes a screen generation unit 131, a noise detection unit 132, a malicious worker detection unit 133, and a noise expression expansion unit 134. The communication unit 11 communicates with the terminal device 20 via the network 40.

The control unit 13 is implemented as hardware by, for example, a processor. Examples of the processor implementing the control unit 13 include a central processing unit (CPU), digital signal processor (DSP), field programmable gate array (FPGA), and the like. Furthermore, the storage unit 12 is implemented as hardware by, for example, a storage medium. Examples of the storage medium implementing the storage unit 12 include a memory, hard disk drive (HDD), solid state drive (SSD), and the like, and examples of the memory include a random access memory (RAM), synchronous dynamic random access memory (SDRAM), a flash memory, and the like. The communication unit 11 is implemented as hardware by, for example, a communication module.

### <Configuration of storage unit>

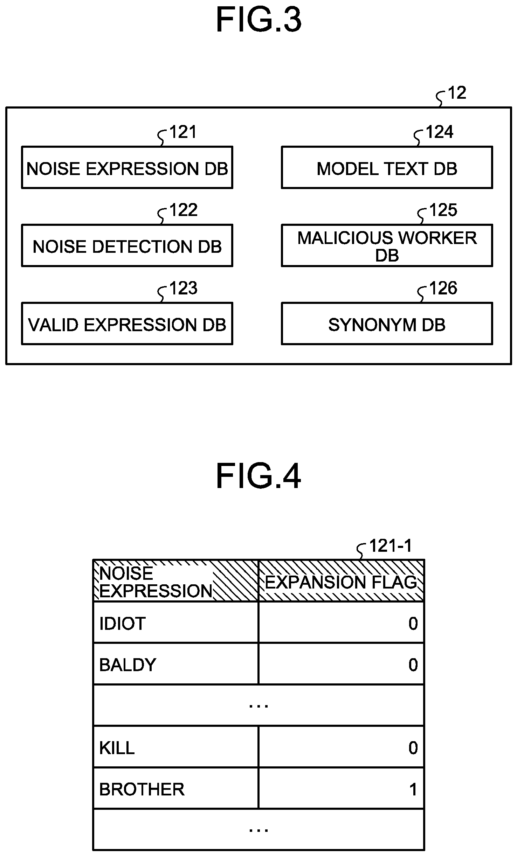

FIG. 3 is a diagram illustrating an exemplary configuration of the storage unit according to the first embodiment of the present disclosure. In FIG. 3, the storage unit 12 stores a noise expression database (DB) 121, a noise detection DB 122, a valid expression DB 123, a model text DB 124, a malicious worker DB 125, and a synonym DB 126.

### <Configuration of noise expression DB >

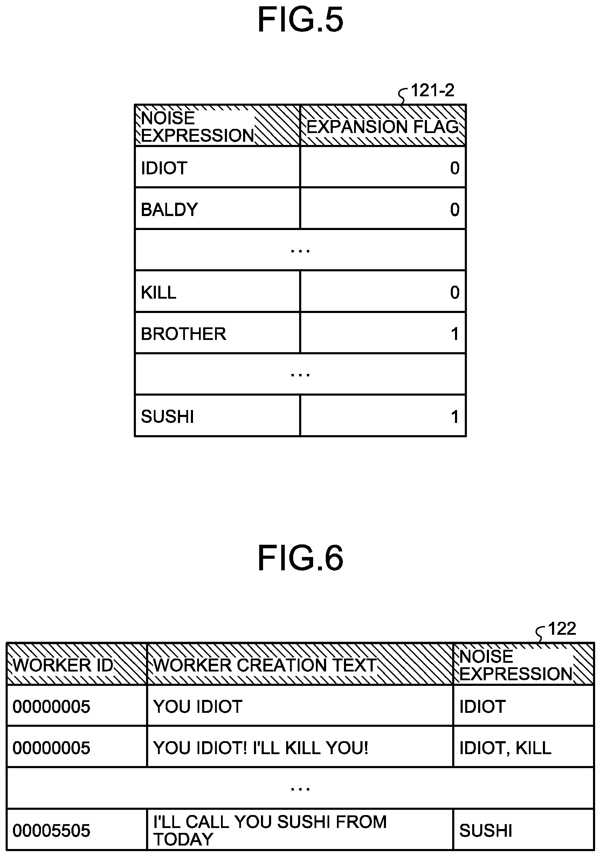

FIGS. 4 and 5 are each a table illustrating an exemplary configuration of the noise expression DB according to the first embodiment of the present disclosure. FIG. 4 illustrates a noise expression DB 121-1 before expansion, and FIG. 5 illustrates a noise expression DB 121-2 after the expansion. Hereinafter, the noise expression DBs 121-1 and 121-2 may be collectively referred to as "noise expression DB 121".

As illustrated in FIGS. 4 and 5, in the noise expression DB 121, texts as noise expression (hereinafter, each sometimes referred to as "noise expression text"), and "expansion flags" each indicating whether the noise expression text added to the noise expression DB 121 is obtained by expansion, are registered in association with each other. The noise expression text having the expansion flag indicating "0" is a noise expression text registered in advance by an operator of the information processing apparatus 10, and the noise expression text having the expansion flag indicating "1" is a noise expression text automatically added to the noise expression DB 121 by the expansion of the noise expression DB 121 performed by the noise expression expansion unit 134. Therefore, in the noise expression DB 121-1 before the expansion, all of the expansion flags of the noise expression texts are "0", and the noise expression DB 121-1 is expanded by the noise expression expansion unit 134 into the noise expression DB 121-2.

### <Configuration of noise detection DB>

FIG. 6 is a table illustrating an exemplary configuration of the noise detection DB according to the first embodiment of the present disclosure. As illustrated in FIG. 6, in the noise detection DB 122, "worker IDs" each of which is an identifier capable of uniquely identifying a worker who has created a response text, worker creation texts including the noise expression text, of the response texts created by the workers (hereinafter, each may be referred to as "worker creation text"), and the noise expression texts included in the worker creation texts are registered in association with each other. For example, FIG. 6 illustrates that in the noise detection DB 122, the noise expression text "idiot" is detected by the noise detection unit 132, in the response text "You idiot." that is by the worker whose worker ID is "00000005".

### <Configuration of valid expression DB>

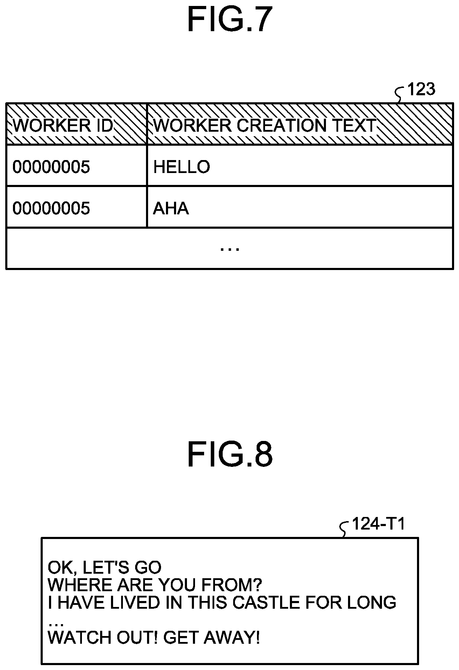

FIG. 7 is a table illustrating an exemplary configuration of the valid expression DB according to the first embodiment of the present disclosure. As illustrated in FIG. 7, in the valid expression DB 123, the worker IDs and valid worker creation texts not including the noise expression texts of the worker creation texts are registered, in association with each other.

### <Configuration of model text DB>

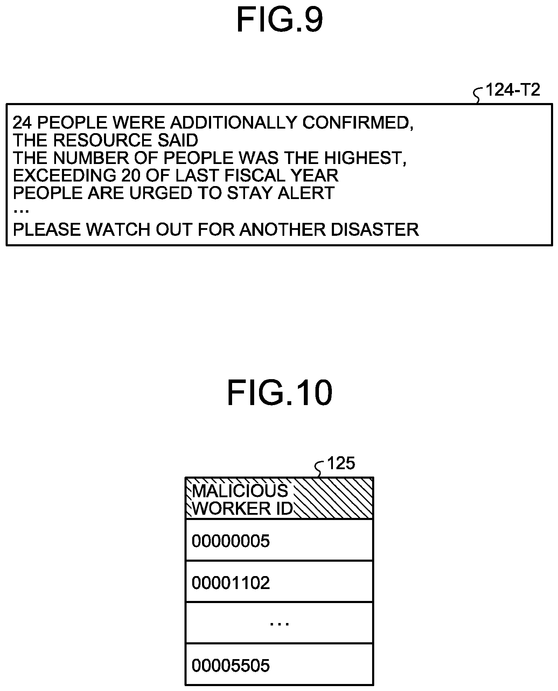

FIGS. 8 and 9 are each a diagram illustrating an exemplary configuration of the model text DB according to the first embodiment of the present disclosure. As illustrated in FIGS. 8 and 9, in the model text DB 124, a text to be a model (hereinafter, sometimes referred to as "model text") is registered in advance by the operator of the information processing apparatus 10. For example, a model text 124-T1 illustrated in FIG. 8 is part of lines of a character that is a selection of a novel or the like, and a model text 124-T2 illustrated in FIG. 9 is an excerpt from a news script.

### <Configuration of malicious worker DB>

FIG. 10 is a table illustrating an exemplary configuration of the malicious worker DB according to the first embodiment of the present disclosure. As illustrated in FIG. 10, in the malicious worker DB 125, the worker IDs (hereinafter, each may be referred to as "malicious worker ID") of workers (hereinafter, each may be referred to as "malicious worker") who tend to create the response texts including the noise expression texts are registered. The malicious worker IDs are registered in the malicious worker DB 125 by the malicious worker detection unit 133.

### <Configuration of Synonym DB>

FIG. 11 is a table illustrating an exemplary configuration of the synonym DB according to the first embodiment of the present disclosure. As illustrated in FIG. 11, in the synonym DB 126, a certain term and synonyms for the certain term are registered in association with each other. For example, in the synonym DB 126 illustrated in FIG. 11, a plurality of synonyms such as "older brother", "male", and "man" are associated with a term "brother". Registration in the synonym DB 126 is performed in advance by the operator of the information processing apparatus 10.

### <Process in malicious worker detection unit>

The malicious worker detection unit 133 determines whether each worker is the malicious worker, on the basis of at least one of a degree of inclusion of the noise expression text in the worker creation text (hereinafter may be referred to as "noise content degree") and similarity between the worker creation text and the model texts (hereinafter may be referred to as "text similarity"). For example, the malicious worker detection unit 133 determines, as the malicious worker, a worker who has created a response text having a noise content degree not less than a threshold TH1 or a response text having a text similarity less than a threshold TH2. In this way, the malicious worker detection unit 133 detects the malicious worker from among the plurality of workers who create the response texts using the terminal devices 20. Then, the malicious worker detection unit 133 registers the malicious worker ID corresponding to the detected malicious worker, in the malicious worker DB 125.

For example, the malicious worker detection unit 133 may calculate, as the noise content degree, the percentage (hereinafter, may be referred to as a "noise content rate") of the noise expression text included in the response text having created by a worker (hereinafter, may be referred to as "determination target worker") being a target for determination whether to be the malicious worker.

For example, the malicious worker detection unit 133 refers to the noise detection DB 122 and the valid expression DB 123 to calculate the noise content rate on the basis of the worker ID.

For example, in a case where the determination target worker is the worker having the worker ID "00000005", two noise expression texts, as the terms "idiot" and "kill", are included with respect to the four response texts that created by the determination target worker, in the noise detection DB 122 and the valid expression DB 123 illustrated in FIGS. 6 and 7. Therefore, the malicious worker detection unit 133 may calculate the noise content rate as "2/4 = 0.5".

Furthermore, for example, in a case where the determination target worker is the worker having the worker ID "00000005", three noise expression texts are detected with respect to the four response texts created by the determination target worker, in the noise detection DB 122 and the valid expression DB 123 illustrated in FIGS. 6 and 7. Therefore, the malicious worker detection unit 133 may calculate the noise content rate as "3/4 = 0.75".

In addition, for example, the malicious worker detection unit 133 may calculate a Simpson coefficient (similarity between sets) between a set of terms included in the response text created by the determination target worker and a set of terms included in the model texts registered in the model text DB 124, as the text similarity. Note that the malicious worker detection unit 133 may calculate the Simpson coefficient by using a phrase formed of a plurality of terms instead of the term, or may select a term used for calculation of the Simpson coefficient on the basis of a part of speech such as a noun, verb, or particle. In addition, the malicious worker detection unit 133 may calculate the text similarity by using a Jaccard coefficient, Dice coefficient, or the like instead of the Simpson coefficient.

In addition, for example, the malicious worker detection unit 133 may convert the response text created by the determination target worker into a TF-IDF vector of the terms included in the response text to calculate cosine similarity (vector similarity) of the vectorized response text to each model text that has been similarly vectorized, as the text similarity. Note that the malicious worker detection unit 133 may calculate the cosine similarity by using a phrase formed of a plurality of terms instead of the term, or may select a term used for calculation of the cosine similarity on the basis of a part of speech such as a noun, verb, or particle. In addition, the malicious worker detection unit 133 may perform vectorization by using an appearance frequency of the term, instead of the TF-IDF of the term, or may calculate the vector similarity by using Euclidean distance.

In a case where the malicious worker detection unit 133 calculates the noise content rate and the Simpson coefficient as described above, the malicious worker detection unit 133 detects, for example, a worker who has created a response text having a noise content rate of 0.3 or more or a response text having a Simpson coefficient of less than 0.5, as the malicious worker.

As described above, detecting the malicious worker on the basis of not only the noise content degree but also the text similarity makes it possible to detect, as the malicious worker, the worker who has created the response text that is significantly deviated from the model text although no noise expression text is included.

### <Process in noise expression expansion unit>

The noise expression expansion unit 134 searches the noise detection DB 122 and the valid expression DB 123 with the malicious worker ID having been registered in the malicious worker DB 125, thereby extracting a response text (hereinafter, may be referred to as "malicious worker text") created by the malicious worker, from the worker creation texts having been registered in the noise detection DB 122 or the valid expression DB 123. Furthermore, the noise expression expansion unit 134 compares terms included in the malicious worker text with the terms included in the model texts registered in the model text DB 124, thereby extracting a term that is frequently used by the malicious worker (hereinafter, may be referred to as "malicious worker term") from the malicious worker text. Then, when the extracted malicious worker term does not match any of those in the noise expression texts having been registered in the noise expression DB 121, the noise expression expansion unit 134 adds the extracted malicious worker term to the noise expression DB 121, as a new noise expression text. In addition, the noise expression expansion unit 134 sets the expansion flag "1" to the malicious worker term that is to be added as the new noise expression text to the noise expression DB 121.

For example, when a malicious worker term "Sushi" is extracted from a malicious worker text, the noise expression expansion unit 134 adds the noise expression text "Sushi" to the noise expression DB 121-1 illustrated in FIG. 4. Therefore, the noise expression DB 121-1 illustrated in FIG. 4 is expanded to the noise expression DB 121-1 illustrated in FIG. 5.

For example, a G-test or a chi-square test can be used to extract the malicious worker text. The noise expression expansion unit 134 compares the appearance frequency in the malicious worker text with the appearance frequency in the model text for each term, thereby extracting a term that is significantly frequently used by the malicious worker, from the malicious worker text. Note that the noise expression expansion unit 134 may extract a phrase formed of a plurality of terms instead of the term, or may select a target term on the basis of a part of speech such as a noun, verb, or particle.

### <Operation of information processing apparatus>

FIGS. 12 to 21 are each a diagram illustrating an operation example of the information processing apparatus according to the first embodiment of the present disclosure. Hereinafter, the operation examples of the information processing apparatus 10 when the worker creates the response text by using the terminal device 20 will be described. Hereinafter, in an example, an operation example (operation example 1) upon login to the information processing apparatus 10, an operation example (operation example 2) upon creation of the response text as a speech of a character, and an operation example (operation example 3) upon creation of the response text as spoken words will be described.

### <Operation example 1 (FIG. 12) >

When creating the response text, the worker inputs the worker ID and a password to the terminal device 20 to log in to the information processing apparatus 10. The worker ID and password that are input to the terminal device 20 are transmitted to the information processing apparatus 10. The screen generation unit 131 receives the worker ID and the password by using the communication unit 11, and after the successful login to the information processing apparatus 10 the screen generation unit 131 searches the malicious worker DB 125 on the basis of the worker ID with which the login is successful. When the worker ID with which the login is successful is in the malicious worker DB 125 (FIG. 10), the screen generation unit 131 generates a feedback screen SCF as illustrated in FIG. 12, and transmits the generated feedback screen SCF to the terminal device 20 used by the malicious worker by using the communication unit 11. The terminal device 20 having received the feedback screen SCF displays the feedback screen SCF. As illustrated in FIG. 12, for example, the feedback screen SCF is a screen for calling attention to a worker having a worker ID of "00000005" that the worker is identified as the malicious worker. Therefore, the worker using the terminal device 20 can recognize that the worker is identified as the malicious worker.

### <Operation example 2 (FIGS. 13 to 16)>

In the operation example 2, collection of speech texts of the character by the information processing apparatus 10 will be described. The speech texts collected in the operation example 2 can be used for constructing an interactive system.

When the worker successfully logs in, the screen generation unit 131 generates a screen (hereinafter, may be referred to as "text creation screen") prompting the worker to create the response text, and transmits the generated text creation screen to the terminal device 20 by using the communication unit 11. The terminal device 20 that has received the text creation screen displays the text creation screen.

A text creation screen SCA illustrated in FIG. 13 includes an instruction or a question for the worker, an input area IA for the response text, and a register button BA for the response text. The worker using the terminal device 20 inputs, to the input area IA, the response text created by the worker in consideration of the instruction or the question displayed on the creation screen SCA, and then presses or touches the register button BA. When the register button BA is pressed or touched, the worker creation text input to the input area IA is transmitted from the terminal device 20 to the information processing apparatus 10 and received by the noise detection unit 132 by using the communication unit 11.

The noise detection unit 132 detects the noise expression text included in the received worker creation text. The noise detection unit 132 performs string matching between the worker creation text and the noise expression texts registered in the noise expression DB 121, and performs noise detection to determine whether any of the noise expression texts is included in the worker creation text. When any of the noise expression texts registered in the noise expression DB 121 is found in the worker creation text, the noise detection unit 132 determines that the noise expression text is included in the worker creation text, and when the noise expression texts registered in the noise expression DB 121 are not found in the worker creation text, the noise detection unit 132 determines that no noise expression text is included in the worker creation text.

When it is determined that the noise expression text is included in the worker creation text, that is, when the noise expression text is detected in the worker creation text, the noise detection unit 132 extracts the noise expression text included in the worker creation text from the worker creation text, and registers the extracted noise expression text in the noise detection DB 122, in association with the worker ID and the worker creation text (FIG. 6).

In addition, when the noise expression text is detected in the worker creation text, the noise detection unit 132 outputs the worker creation text including the noise expression text to the malicious worker detection unit 133.

On the other hand, when it is determined that no noise expression text is included in the worker creation text, that is, when no noise expression text is detected in the worker creation text, the noise detection unit 132 registers the worker creation text directly in the valid expression DB 123, in association with the worker ID (FIG. 7) .

For example, as illustrated in FIG. 14, when the register button BA is pressed or touched after a worker creation text TXA1 "What is your name?" is input to the input area IA, the noise detection unit 132 registers the worker creation text TXA1 not including any noise expression text as registered in the noise expression DB 121 (FIGS. 4 and 5) directly in the valid expression DB 123.

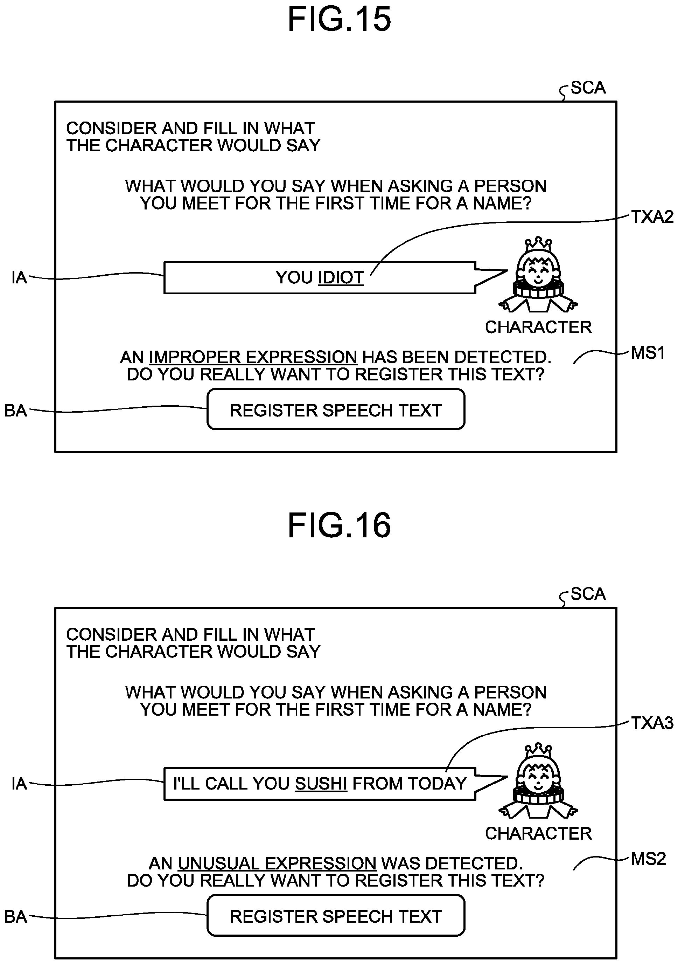

Furthermore, for example, when the register button BA is pressed or touched after a worker creation text TXA2 "You idiot." is input to the input area IA, the noise detection unit 132 detects the noise expression text "idiot" in the worker creation text TXA2 including the noise expression text "idiot" that is registered in the noise expression DB 121 (FIGS. 4 and 5). In addition, the noise detection unit 132 notifies the screen generation unit 131 of the detection of the noise expression text in the worker creation text TXA2, the worker creation text TXA2 in which the noise expression text is detected, and the detected noise expression text "idiot". As illustrated in FIG. 15, the screen generation unit 131 highlights the noise expression text "idiot" in the worker creation text TXA2 "You idiot" in accordance with this notification, and causes the text creation screen SCA to display a message MS1 for notifying the worker of the detection of the noise expression text in the worker creation text TXA2. The message MS1 is a message displayed when the noise expression text detected in the worker creation text corresponds to any of the noise expression texts whose flags indicate "0" of the plurality of noise expression texts having been registered in the noise expression DB 121. Then, when the register button BA is pressed or touched while the noise expression text "idiot" is included in the worker creation text TXA2, the noise detection unit 132 registers "00000005" being the worker ID of the worker who has created the worker creation text TXA2, the worker creation text TXA2 "You idiot", and the noise expression text "idiot", in the noise detection DB 122 (FIG. 6) in association with each other.

Furthermore, for example, when the register button BA is pressed or touched after a worker creation text TXA3 "I'll call you Sushi from today." is input to the input area IA, the noise detection unit 132 detects the noise expression text "Sushi" in the worker creation text TXA3 including the noise expression text "Sushi" that is registered in the noise expression DB 121-2 (FIG. 2). In addition, the noise detection unit 132 notifies the screen generation unit 131 of the detection of the noise expression text in the worker creation text TXA3, the worker creation text TXA3 in which the noise expression text is detected, and the detected noise expression text "Sushi". As illustrated in FIG. 16, the screen generation unit 131 highlights the noise expression text "Sushi" in the worker creation text TXA3 "I'll call you Sushi from today." in accordance with this notification, and causes the text creation screen SCA to display a message MS2 for notifying a worker of the detection of the noise expression text in the worker creation text TXA3. The message MS2 is a message displayed when the noise expression text detected in the worker creation text corresponds to the noise expression text whose flag indicates "1" of the plurality of noise expression texts having been registered in the noise expression DB 121, and is a message whose expression has a content different from that of the message MS1. Then, when the register button BA is pressed or touched while the noise expression text "Sushi" is included in the worker creation text TXA3, the noise detection unit 132 registers "00005505" being the worker ID of the worker who has created the worker creation text TXA3, the worker creation text TXA3 "I'll call you Sushi from today." and the noise expression text "Sushi", in the noise detection DB 122 (FIG. 6) in association with each other.

### <Operation example 3 (FIGS. 17 to 21)>

In the operation example 3, collection of rewritten texts into the spoken words by the information processing apparatus 10 will be described. The rewriting text collected in the operation example 3 can be used for mutual conversion between written words and spoken words.

Differences from the operation example 2 will be described below.

A text creation screen SCB illustrated in FIG. 17 includes an instruction for the worker, an original text OT before rewriting, an input area IB for the response text, and a register button BB for the response text. The worker using the terminal device 20 inputs, to the input area IB, the response text rewritten with reference to the original text OT, according to the instruction displayed on the creation screen SCB, and then presses or touches the register button BB. When the register button BB is pressed or touched, the worker creation text input to the input area IB is transmitted from the terminal device 20 to the information processing apparatus 10 and received by the noise detection unit 132 by using the communication unit 11.

The noise detection unit 132 detects the noise expression text with respect to the received worker creation text in a similar manner to that in the operation example 2 described above.

For example, as illustrated in FIG. 18, when the register button BA is pressed or touched after a worker creation text TXB1 "There was an emergency call that a car was caught in a landslide on the ninth. According to the emergency call, the man who was driving the car was slightly injured." is input to the input area IB, the noise detection unit 132 registers the worker creation text TXB1 not including any noise expression text as registered in the noise expression DB 121 (FIGS. 4 and 5) directly in the valid expression DB 123.

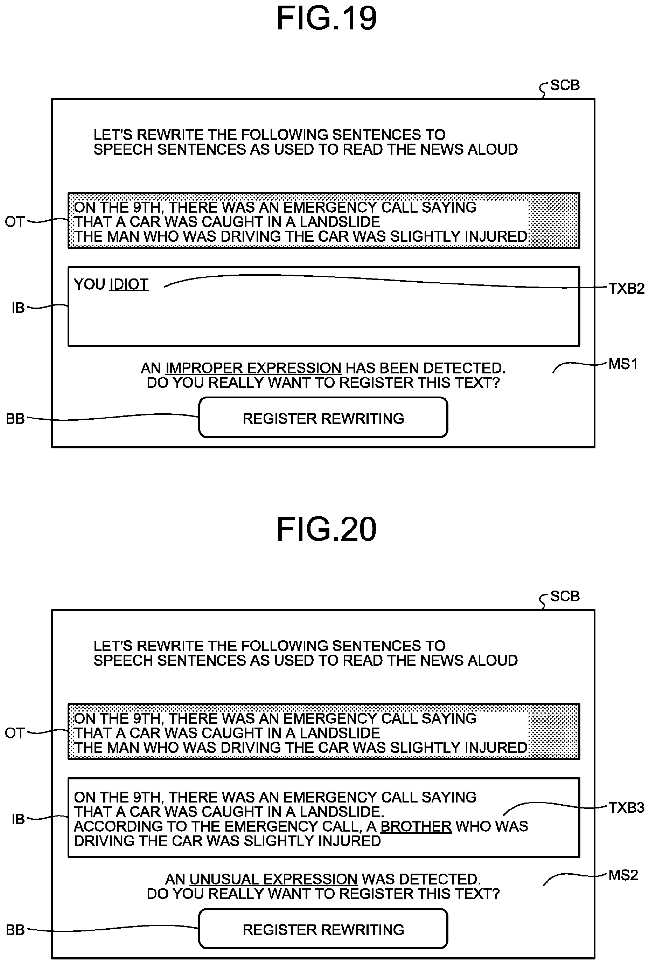

Furthermore, for example, when the register button BB is pressed or touched after a worker creation text TXB2 "You idiot." is input to the input area IB, the noise detection unit 132 detects the noise expression text "idiot" in the worker creation text TXB2 including the noise expression text "idiot" that is registered in the noise expression DB 121 (FIGS. 4 and 5). In addition, the noise detection unit 132 notifies the screen generation unit 131 of the detection of the noise expression text in the worker creation text TXB2, the worker creation text TXB2 in which the noise expression text is detected, and the detected noise expression text "idiot". As illustrated in FIG. 19, the screen generation unit 131 highlights the noise expression text "idiot" in the worker creation text TXB2 "You idiot" according to this notification, and causes the text creation screen SCB to display the message MS1 for notifying the worker of the detection of the noise expression text in the worker creation text TXB2. Then, when the register button BB is pressed or touched while the noise expression text "idiot" is included in the worker creation text TXB2, the noise detection unit 132 registers "00000005" being the worker ID of the worker who has created the worker creation text TXB2, the worker creation text TXB2 "You idiot", and the noise expression text "idiot", in the noise detection DB 122 (FIG. 6) in association with each other.

For example, when the register button BA is pressed or touched after a worker creation text TXB3 "There was an emergency call that a car was caught in a landslide on the ninth. According to the emergency call, a brother who was driving the car was slightly injured." is input to the input area IB, the noise detection unit 132 detects the noise expression text "brother" in the worker creation text TXB3 including the noise expression text "brother" registered in the noise expression DB 121 (FIGS. 4 and 5). In addition, the noise detection unit 132 notifies the screen generation unit 131 of the detection of the noise expression text in the worker creation text TXB3, the worker creation text TXB3 in which the noise expression text is detected, and the detected noise expression text "brother". As illustrated in FIG. 20, the screen generation unit 131 emphasizes and displays the noise expression text "brother", in the worker creation text TXB3 "There was an emergency call that a car was caught in a landslide on the ninth. According to the emergency call, a brother who was driving the car was slightly injured", according to this notification, and causes the text creation screen SCB to display the message MS2 for notifying the worker of the detection of the noise expression text in the worker creation text TXB3. Then, when the register button BA is pressed or touched while the noise expression text "brother" is included in the worker creation text TXB3, the noise detection unit 132 registers the worker ID of the worker who has created the worker creation text TXB3, the worker creation text TXB3, and the noise expression text "brother", in the noise detection DB 122 in association with each other.

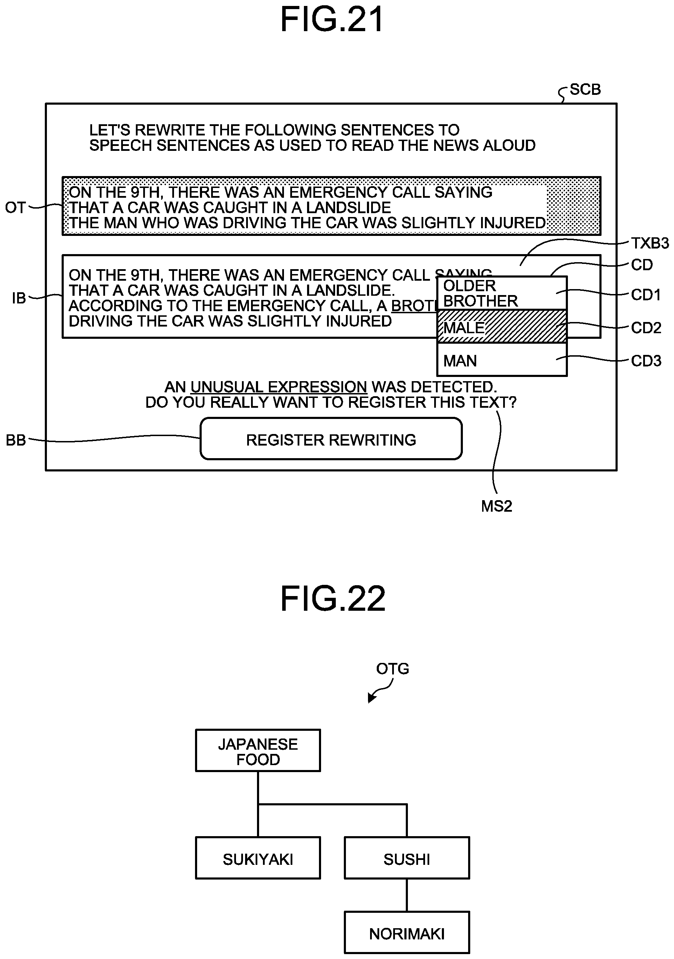

In addition, for example, as illustrated in FIG. 21, the screen generation unit 131 may display a correction candidate group CD including a correction candidate CD1 "brother", a correction candidate CD2 "male", and a correction candidate CD3 "man", as correction candidates for the noise expression text "brother" detected by the noise detection unit 132, near the noise expression text "brother". The correction candidates CD1, CD2, and CD3 are the synonyms associated with the term "brother" in the synonym DB 126 (FIG. 11). The screen generation unit 131 searches the synonym DB 126 on the basis of the noise expression text detected by the noise detection unit 132 to acquire the synonyms corresponding to the noise expression text from the synonym DB 126, as the correction candidates for the noise expression text. The worker who has seen the message MS2 selects any one of the plurality of correction candidates included in the correction candidate group CD to correct the noise expression text "brother" included in the worker creation text TXB3 to the text "older brother", "male", or "man".

The first embodiment has been described above.

### [Second Embodiment]

### <Process in noise expression expansion unit>

In the first embodiment, the noise expression expansion unit 134 adds the malicious worker term extracted from the malicious worker text to the noise expression DB 121-1, as the noise expression text.

Meanwhile, in a second embodiment, in addition to the malicious worker term extracted from the malicious worker text, the noise expression expansion unit 134 further adds a term related to the malicious worker term to the noise expression DB 121-1, as the noise expression text.

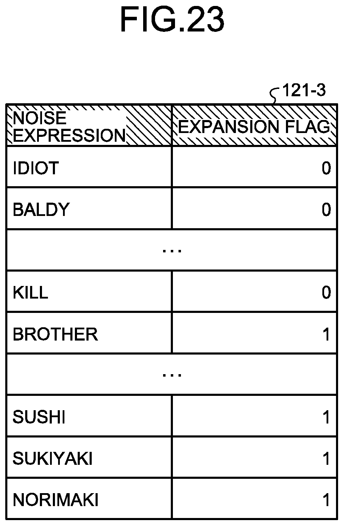

FIGS. 22 and 23 are each a diagram illustrating an exemplary process in the noise expression expansion unit according to the second embodiment of the present disclosure.

FIG. 22 illustrates a conceptual system OTG that shows high-order and low-order relation between terms. This conceptual system OTG is stored in the storage unit 12 in advance. The conceptual system OTG illustrated in FIG. 22 shows that subordinate concepts of "Japanese food" is "Sukiyaki" and "Sushi", and a subordinate concept of "Sushi" is "Norimaki (Sushi roll)". In other words, the conceptual system OTG illustrated in FIG. 22 shows that there are "Sukiyaki" and "Sushi" as the second-order concepts and "Norimaki" as the third-order concept, for "Japanese food" that is the first-order concept. In this configuration, the noise expression expansion unit 134 identifies "Sukiyaki", "Sushi", and "Norimaki", that are concepts lower than "Japanese food", as terms related to "Japanese food". In addition, the noise expression expansion unit 134 identifies "Sukiyaki" that is the concept equivalent to "Sushi" and "Norimaki" that is the concept lower than "Sushi", as terms related to "Sushi".

Therefore, when the malicious worker term "Sushi" is extracted from the malicious worker text, the noise expression expansion unit 134 also adds "Sukiyaki" and "Norimaki" that are terms related to the term "Sushi", in addition to the noise expression text "Sushi", to the noise expression DB 121, as the noise expression texts, on the basis of the conceptual system OTG. Therefore, the noise expression DB 121-1 illustrated in FIG. 4 is expanded to a noise expression DB 121-3 illustrated in FIG. 23.

Note that, in the above description, the noise expression expansion unit 134 identifies the term related to the malicious worker term, on the basis of the conceptual system. However, the noise expression expansion unit 134 may identify a term having an expression conceptually close to the malicious worker term, as a term related to the malicious worker term by using distributed representation of words.

The second embodiment has been described above.

### [Third Embodiment]

All or part of each process in the above description in the control unit 13 may be implemented by causing the control unit 13 to execute a program corresponding to each process. For example, the program corresponding to each process in the control unit 13 in the above description may be stored in the storage unit 12, read from the storage unit 12 by the control unit 13, and executed by the control unit 13. In addition, the program may be stored in a program server connected to the information processing apparatus 10 via any network, downloaded from the program server to the information processing apparatus 10 for execution, or may be stored in a recording medium readable by the information processing apparatus 10, and read from the recording medium for execution. Examples of the recording medium readable by the information processing apparatus 10 include portable storage media, such as a memory card, USB memory, SD card, flexible disk, magnetooptical disk, CD-ROM, DVD, and a Blu-ray (registered trademark) disk.

In addition, the program is a data processing method described in any language or by any description method, and may be in any format such as a source code or a binary code. In addition, the program is not necessarily limited to a single program, and also includes programs distributed into a plurality of modules or a plurality of libraries, and a program implementing the function thereof in cooperation with a separate program represented by an OS.

Described above is a third embodiment.

### [Effects of disclosed technology]

As described above, the information processing apparatus (the information processing apparatus 10 according to each embodiment) of the present disclosure includes the communication unit (the communication unit 11 according to each embodiment), and the control unit (the control unit 13 according to each embodiment). The communication unit receives a text created in the terminal device (the terminal device 20 according to each embodiment). The control unit performs noise detection to determine whether the noise expression is included in the received text, and when the noise expression is included in the received text, the control unit notifies the terminal device of detection of the noise expression.

In this way, notifying the worker using the terminal device that the text created by the worker includes the noise expression makes it possible to prompt the worker to correct the noise expression into a text without the noise expression by him/herself with the conscience of the worker. In addition, this configuration makes it possible to notify the worker of the presence of the noise expression that has not been noticed by the worker him/herself, thus giving the worker minimum instruction for creating high-quality text. Therefore, the qualities of the texts created by the unspecified number of workers can be maintained.

In addition, the control unit detects the malicious worker who tends to create the text including the noise expression, from among the plurality of workers who creates text by using the terminal device.

This configuration makes it possible to exclude the malicious worker from the unspecified number of workers from whom creation of the text is requested, thus, reducing an opportunity to create the text including the noise expression. Therefore, it is possible to reduce such unnecessary text that cannot be used even though the text is created by paying the worker.

In addition, the control unit transmits a call attention screen to the terminal device used by the detected malicious worker.

This configuration makes it possible to cause the worker him/herself to recognize that he/she is the malicious worker, prompting the malicious worker to correct his/her behavior in text creation.

Furthermore, the information processing apparatus of the present disclosure includes the database (the noise expression DB 121 of the embodiment) in which the plurality of noise expressions is registered in advance. The control unit performs noise detection by using the database, and adds a term included in the text created by the malicious worker to the database, as the new noise expression.

This configuration makes it possible to gradually accumulate the noise expressions in the database, thereby gradually increasing the noise expression detection rate with the accumulation of the noise expressions.

Note that the effects described herein are merely examples, and the present disclosure is not limited to these effects and may have other effects.

Furthermore, the disclosed technology can also employ the following configurations.
(1) An information processing apparatus including:
   a communication unit that receives a text created in a terminal device; and
   a control unit that performs noise detection to determine whether a noise expression is included in the received text and notifies, when the noise expression is included in the received text, the terminal device of detection of the noise expression.
(2) The information processing apparatus according to (1), wherein
   the control unit detects a malicious worker who tends to create a text including a noise expression, from among a plurality of workers each creating a text by using a terminal device.
(3) The information processing apparatus according to (2), wherein
   the control unit transmits a call attention screen to a terminal device used by the detected malicious worker.
(4) The information processing apparatus according to (2), further including
   a database in which a plurality of noise expressions is registered in advance,
   wherein the control unit performs the noise detection by using the database and adds a term included in a text created by the malicious worker to the database, as a new noise expression.
(4) A notification method including:
   receiving a text created in a terminal device;
   performing noise detection to determine whether a noise expression is included in the received text; and
   notifying, when the noise expression is included in the received text, the terminal device of detection of the noise expression.

### Reference Signs List

- 1: COMPUTER NETWORK SYSTEM
- 10: INFORMATION PROCESSING APPARATUS
- 20: TERMINAL DEVICE
- 13: CONTROL UNIT
- 131: SCREEN GENERATION UNIT
- 132: NOISE DETECTION UNIT
- 133: MALICIOUS WORKER DETECTION UNIT
- 134: NOISE EXPRESSION EXPANSION UNIT

## Claims

1. An information processing apparatus including:
a communication unit that receives a text created in a terminal device; and
a control unit that performs noise detection to determine whether a noise expression is included in the received text and notifies, when the noise expression is included in the received text, the terminal device of detection of the noise expression.

2. The information processing apparatus according to claim 1, wherein
the control unit detects a malicious worker who tends to create a text including a noise expression, from among a plurality of workers each creating a text by using a terminal device.

3. The information processing apparatus according to claim 2, wherein
the control unit transmits a call attention screen to a terminal device used by the detected malicious worker.

4. The information processing apparatus according to claim 2, further including
a database in which a plurality of noise expressions is registered in advance,
wherein the control unit performs the noise detection by using the database and adds a term included in a text created by the malicious worker to the database, as a new noise expression.

5. A notification method including:
receiving a text created in a terminal device;
performing noise detection to determine whether a noise expression is included in the received text; and
notifying, when the noise expression is included in the received text, the terminal device of detection of the noise expression.
